(19) Europäisches Patentamt
European Patent Office
Office européen des brevets

(11) **EP 2 102 495 B1**

(12) **EUROPÄISCHE PATENTSCHRIFT**

(45) Veröffentlichungstag und Bekanntmachung des Hinweises auf die Patenterteilung:
**11.01.2017 Patentblatt 2017/02**

(51) Int Cl.:
*F03D 7/02* *(2006.01)*    *F03D 9/00* *(2016.01)*

(21) Anmeldenummer: **07856198.2**

(22) Anmeldetag: **20.11.2007**

(86) Internationale Anmeldenummer:
**PCT/EP2007/010026**

(87) Internationale Veröffentlichungsnummer:
**WO 2008/061698 (29.05.2008 Gazette 2008/22)**

(54) **WINDENERGIEANLAGE MIT GEGENSYSTEMREGELUNG UND BETRIEBSVERFAHREN**

WIND ENERGY INSTALLATION WITH NEGATIVE SEQUENCE SYSTEM REGULATION AND OPERATING METHOD

DISPOSITIF D'ÉOLIENNE COMPORTANT UNE RÉGULATION DE SYSTÈME INVERSE ET PROCÉDÉ D'UTILISATION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **20.11.2006 DE 102006054870**

(43) Veröffentlichungstag der Anmeldung:
**23.09.2009 Patentblatt 2009/39**

(73) Patentinhaber: **Senvion GmbH**
**22297 Hamburg (DE)**

(72) Erfinder:
 • **FORTMANN, Jens**
 **13156 Berlin (DE)**

 • **LETAS, Heinz-Hermann**
 **Gross Meinsdorf**
 **23701 Süsel (DE)**

(74) Vertreter: **Glawe, Delfs, Moll**
**Partnerschaft mbB**
**von Patent- und Rechtsanwälten**
**Postfach 13 03 91**
**20103 Hamburg (DE)**

(56) Entgegenhaltungen:
**WO-A-97/37236**      **DE-A1- 3 206 598**
**DE-A1- 10 228 062**     **DE-A1-102007 002 102**
**DE-A1-102007 005 165**

**Beschreibung**

Die Erfindung betrifft eine Windenergieanlage mit einem Rotor, einem mehrphasigen Generator, einem Umrichter, der an den Generator und ein Netz angeschlossen ist, und einer Steuerung, die mit dem Umrichter zusammenwirkt und eine Gegensystemregelung umfasst, sowie einen entsprechenden Windpark und Betriebsverfahren.

In vielen Stromnetzen wird bereits ein beträchtlicher Teil der Leistung von Windenergieanlagen erzeugt. Sie bieten neben dem Vorteil der regenerativen Energieerzeugung und dezentralen Einspeisung von Wirkleistung den Vorzug, dass zur Stützung des Netzes im Fehlerfall auch Blindleistung dezentral von modernen Windenergieanlagen bereitgestellt werden kann. Auf symmetrische Netzfehler kann damit wirksam reagiert werden. Schwierigkeiten können aber bei unsymmetrischen Netzfehlern auftreten. Es kann dann zu Schwingungen im Antriebsstrang der Windenergieanlage kommen. Solche Schwingungen belasten das Rotor-Generator-System und erhöhen das Ausfallrisiko einer Windenergieanlage. Siehe zum Beispiel DE 3206598 A1.

Es ist vorgeschlagen worden, durch asymmetrische Netzfehler hervorgerufenen Drehmomentschwingungen mittels einer so genannten Gegensystemregelung entgegenzuwirken. Eine solche ist in einem Artikel "Transient Performance of Voltage Source Converter under Unbalanced Voltage Dips" von Magueed, F. et al. beschrieben worden. Ein Gegensystem wird in mitrotierenden d, q-Koordinaten gebildet, so dass es zu einem Gleichsignal wird. Im Generator auftretende Stromasymmetrien können durch Aufaddieren und Rücktransformation ausgeglichen werden. Die Drehmomentschwingungen verringern sich dadurch. Allerdings steht dem als Nachteil gegenüber, nämlich dass im Gegenzug größere Spannungsasymmetrien auftreten. Das Netz wird insoweit also mit zusätzlicher Asymmetrie belastet.

Es ist zwar bekannt, dass zur Abhilfe Synchrongeneratoren im Netz vorgesehen werden können. Jedoch entsteht dadurch zusätzlicher Aufwand.

Der Erfindung liegt die Aufgabe zugrunde, Windenergieanlagen der eingangs genannten Art dahingehend zu verbessern, bei unsymmetrischen Netzfehlern schädliche Rückwirkungen auf das Netz zu verringern.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage mit einem durch einen Rotor angetriebenen Generator, der mehrphasig elektrische Leistung zum Einspeisen in ein Netz erzeugt, einem Umrichter, der an den Generator und das Netz angeschlossen ist, und eine Steuerung, die mit dem Umrichter zusammenwirkt und eine Gegensystemregelung umfasst, ist gemäß der Erfindung vorgesehen, dass die Gegensystemregelung ein Phasensteuermodul aufweist, das dazu ausgebildet ist, eine elektrische Größe des Gegensystems phasenspezifisch zu bestimmen.

Die Erfindung beruht auf dem Gedanken, eine Ausregelung unsymmetrischer Anteile im Netz dadurch zu ermöglichen, dass eine phasenspezifische Aufteilung in ein Mit- und ein Gegensystem vorgenommen wird. Die Erfindung macht sich damit die bekannte Tatsache zu Nutze, dass ein reales mehrphasiges Netz beschrieben werden kann durch ein System mit synchron mitdrehenden Koordinaten (Mitsystem), ein entgegengesetzt rotierendes System (Gegensystem) und ein Nullsystem. Letzteres wird von den üblicherweise verwendeten Transformatoren nicht übertragen, so dass eine Betrachtung des Mit- und Gegensystems ausreicht. Im synchron mit dem Phasenzeiger drehenden Mitsystem werden symmetrische Anteile von Strom und Spannung im Netz als Gleichanteile dargestellt, unsymmetrische als Komponente mit doppelter Netzfrequenz (bei einer Netzfrequenz von 50 Hz also als eine 100 Hz-Komponente). Diese Komponente wird nachfolgend kurz als 100 Hz-Komponente bezeichnet. Entsprechend werden im Gegensystem unsymmetrische Anteile als Gleichanteil dargestellt, und symmetrische Anteile als 100 Hz-Komponente.

Kern der Erfindung ist die Erkenntnis, dass eine phasenspezifische Regelung im Gegensystem vorzusehen. Die Berücksichtigung der Phase erlaubt es, im Gegensystem eine Unterteilung in Wirk- und Blindanteil vorzunehmen. Wirkanteil im Gegensystem meint dabei analog zum Mitsystem eine Leistung oder einen Strom, der phasengleich mit dem Gegensystem ist. Entsprechend ist mit Blindanteil im Gegensystem eine Leistung oder ein Strom gemeint, der gegenphasig zum Gegensystem ist. Damit ist es ermöglicht, den in der Windenergieanlage verfügbaren Strom (der meist durch thermische Grenzen der stromführenden Komponenten limitiert ist) je nach Betriebssituation für Wirk- oder Blindleistung im Gegensystem vorzusehen. Mit der phasenspezifischen Gegensystemregelung kann damit der Strom auch und gerade bei unsymmetrischen Netzbedingungen optimal im Sinne einer Stabilisierung des Netzes genutzt werden. Synchrongeneratoren zur Aufrechterhaltung der Stabilität im Netz sind dann nicht mehr oder nur noch in geringerem Umfang erforderlich.

Grundsätzlich ist eine getrennte Betrachtung von Wirk- und Blindsystem bei der Regelung von Windenergieanlagen bekannt, jedoch beschränkt auf symmetrische Bedingungen im Netz (also im Mitsystem gemäß der hier verwendeten Terminologie). Für unsymmetrische Bedingungen ist es zwar vorgeschlagen worden, eine Gegensystemregelung vorzusehen (Saccomando, G. et al.: "Control and Operation of Gridconnected Voltage Source Converter Under Grid Disturbances in Variable-speed Wind Turbines"), jedoch erfolgt diese Regelung vollkommen phasenunspezifisch. Sie dient allein dazu, die durch ein unsymmetrisches Netz im Generator hervorgerufenen unsymmetrischen Ausgleichsströme zu verringern.

Die Regelung ist zweckmäßigerweise so ausgeführt, dass im normalen Betrieb der Windenergieanlage (also außerhalb von Netzfehlern) vorrangig der Wirkanteil des Gegensystems verringert wird, und zwar vorzugsweise möglichst auf einen Wert von Null. Durch einen möglichst geringen Wirkanteil im Gegensystem wird erreicht, dass sich aus Unsymmetrien im Netz ergebenden Drehmomentschwingungen des Generator-Rotor-Systems reduziert bzw. vermieden werden. Den erheblichen mechanischen Belastungen, die herkömmlicherweise bei Unsymmetrien im Netz auftreten, kann damit wirksam begegnet werden.

Weiterhin ist die Regelung zweckmäßigerweise weiter so ausgeführt, dass im normalen Betrieb der Blindanteil des Gegensystem-Stroms auf einen Wert ungleich Null geregelt wird. Vorzugsweise wird dabei ein möglichst hoher Sollwert für den Blindanteil eingestellt, insbesondere der für die Windenergieanlage oder das Netz zulässige Maximalstrom. Anders als bei der Wirkanteil-Regelung wird also gerade nicht auf einen möglichst geringen Wert hin geregelt, sondern es wird ein ganz anderes Regelungsziel verfolgt. Dadurch, dass die die Regelung im Gegensystem erfindungsgemäß phasenspezifisch ist, wird es überhaupt erst ermöglicht, für Wirk- und Blindanteil unterschiedliche Regelungen vorzusehen.

Die Regelung im Mitsystem kann auf herkömmliche Weise vorgesehen sein. Bei einer bevorzugten Ausführungsform der Erfindung kann aber auch vorgesehen sein, einen Crossovermodul vorzusehen, das dazu ausgebildet ist, die Regelung der Gegensystems mit derjenigen des Mitsystems zu verknüpfen. Es kann vorgesehen sein, dass bei hoher Last der Windenergieanlage und entsprechend großen Strömen der Blind- und der Wirkanteil des Stroms im Gegensystem verringert werden, oder sogar kein Gegensystem-Strom mehr eingespeist wird. Damit kann eine Überlastung der stromführenden Komponenten der Windenergieanlage gerade bei hoher Last vermieden werden. Bei kräftigem Wind kann die Leistung der Windenergieanlage voll ausgenutzt werden, während bei schwächerem Wind erfindungsgemäß Strom über das Gegensystem in das Netz zur Stabilisierung eingespeist wird. Vorzugsweise ist dazu ein Leistungsbeobachter vorgesehen, der mit der phasenspezifischen Regelung des Gegensystems zusammenwirkt. Er ist dazu ausgebildet, den jeweiligen Lastzustand der Windenergieanlage zu ermitteln und die zum Regeln durch das Gegensystem verfügbare Stromreserve zu bestimmen. Mit Vorteil ist vorgesehen, dass die Regelung des Gegensystems nur zeitweilig beschränkt wird, und zwar insbesondere in Situationen bei hohen Rotordrehzahlen. Eine Überlastung des Umrichters der Windenergieanlage durch Überstrom oder Überspannung im Zwischenkreis kann so verhindert werden. Weiter ist zweckmäßigerweise eine Grenzschwelle vorgebbar, unterhalb der Unsymmetrien toleriert und nicht durch die Gegensystemregelung ausgeregelt werden. Zu diesem Zweck kann ein Schwellwertschalter vorgesehen sein, der mit Vorteil in den Leistungsbeobachter integriert sein kann.

Die Regelung ist zweckmäßigerweise weiter so ausgeführt, dass bei einem Netzfehler, wie beispielsweise einem asymmetrischen Spannungseinbruch im Netz, vorrangig der Blindanteil im Gegensystem geregelt wird. Auf diese Weise kann der Spannungsasymmetrie entgegengewirkt werden. Es kann vorgesehen sein, dass im Fehlerfall ausschließlich der Blindanteil im Gegensystem geregelt wird. Bevorzugt ist es aber, ein Abwägungsmodul für die Regelung des Gegensystems vorzusehen. Es ist dazu ausgebildet, bei Netzfehlern in Abhängigkeit von Art und Schwere des Netzfehlers, insbesondere der Spannungsasymmetrie, den verfügbaren Strom auf Wirk- und Blindanteile des Gegensystems aufzuteilen. Besonders bevorzugt ist es, wenn das Abwägungsmodul zusätzlich so ausgebildet ist, dass auch die Wirk- und Blindanteile des Mitsystems einbezogen werden. Es kann ein Prioritätsmodul vorgesehen sein, dass in Abhängigkeit von der Belastung der Windenergieanlage und der Netzfehlersituation der Regelung des Gegensystems, und ggf. auch der des Mitsystems, angepasste Regelprioritäten vorgibt.

Es ist günstig, im Normalbetrieb im Prinzip möglichst viel Wirkstrom im Mitsystem einzuspeisen; die Vorgabe von Führungswerten der Regelung erfolgt hier vorzugsweise an Hand der an sich bekannten Momentenregelung bzw. der Leistungsregelung der Windenergieanlage ggf. angepasst an die elektrischen Vorgaben des angeschlossenen elektrischen Netzes. Der Blindstrom im Mitsystem bestimmt sich in Abhängigkeit von dem eingespeisten Wirkstrom oder nach Maßgabe der Spannungsregelung des Netzes. Insoweit ist die Regelung an sich bekannt. Mit nächstfolgender Priorität wird mittels der erfindungsgemäßen phasenspezifischen Regelung des Gegensystems ein Wirkanteil für den Strom im Gegensystem berechnet. Damit wird eine Verringerung der Schwingungen, insbesondere für den Generator und/oder den Zwischenkreis des Umrichters erreicht. Soweit erforderlich oder gewünscht kann dann mit nachrangiger Priorität ein Blindanteil des Gegensystems bestimmt werden, um eventuell auftretende asymmetrische Spannungen zu reduzieren. - Wird hingegen eine Fehlersituation im Netz erkannt, so gibt das Prioritätsmodul geänderte Prioritäten vor. Die Abhängigkeit vom Netzfehler und dem derzeitigen Betriebspunkt kann dabei das Prioritätsmodul zwischen dem Vorrang der Netzstabilisierung oder der Anlagenschonung unterscheiden. Sofern das Prioritätsmodul eine Netzstabilisierung vorgibt wird in Priorität Blindstrom im Mit- und Gegensystem eingespeist, je nach symmetrischem und unsymmetrischem Anteil der auftretenden Spannung. Sofern das Prioritätsmodul eine Anlagenschonung vorgibt wird vorrangig Wirkstrom im Mitsystem eingespeist, um Schwingungen im Triebstrang und/oder Drehzahländerungen ausregeln zu können. Die verbleibenden Regelreserven können dann dem jeweils anderen System zur Verfügung gestellt werden. Hierzu kann ein spezielles Aufteilungsmodul vorgesehen sein, dass in Abhängigkeit von dem verfügbaren Strom und der Leistungsreserve das Verhältnis der Wirk- und Blindströme im Mitsystem zu denen im Gegensystem bestimmt. Das Aufteilungsmodul kann dynamisch ausgebildet sein, oder es kann eine Statik, zum Beispiel in Gestalt einer Tabelle, implementiert sein.

Die Steuerung der Windenergieanlage enthält vorzugsweise ein Modell der zu regelnden Strecke. Mit Vorteil ist für die phasenspezifische Regelung des Gegensystems ein eigenes Streckenmodell insbesondere des Generators implementiert. Es hat sich gezeigt, dass wesentliche Charakteristiken insbesondere des Rotors des Generators eine beträchtliche Frequenzabhängigkeit aufweisen, die durch ein eigenes Streckenmodell insbesondere im Hinblick auf die 100 Hz Schwingung in optimaler Weise berücksichtigt werden kann.

Die Erfindung bezieht sich weiter auf einen Windpark, in dem eine phasenspezifische Regelung im Gegensystem dezentral an einer oder mehreren Windenergieanlagen erfolgt oder sie in einer zentralen Steuereinrichtung (Parkmaster) vorgesehen ist.

Außerdem bezieht sich die Erfindung auf ein entsprechendes Verfahren zum Betreiben einer Windenergieanlage und/oder eines Windparks. Zur Erläuterung wird auf obige Ausführungen verwiesen, die sinngemäß auch für das Verfahren gelten.

Die Erfindung wird nachfolgend anhand eines vorteilhaften Ausführungsbeispiels unter Bezug auf die beigefügte Zeichnung erläutert. Es zeigen:

Fig. 1   eine schematische Ansicht einer Windenergieanlage gemäß der Erfindung;

Fig. 2   eine schematische Ansicht eines Windparks gemäß der Erfindung;

Fig. 3   eine Blockansicht der Umrichtersteuerung mit der Gegensystemregelung; und

Fig. 4   eine Detailansicht der Struktur der Regelung gemäß Figur 3.

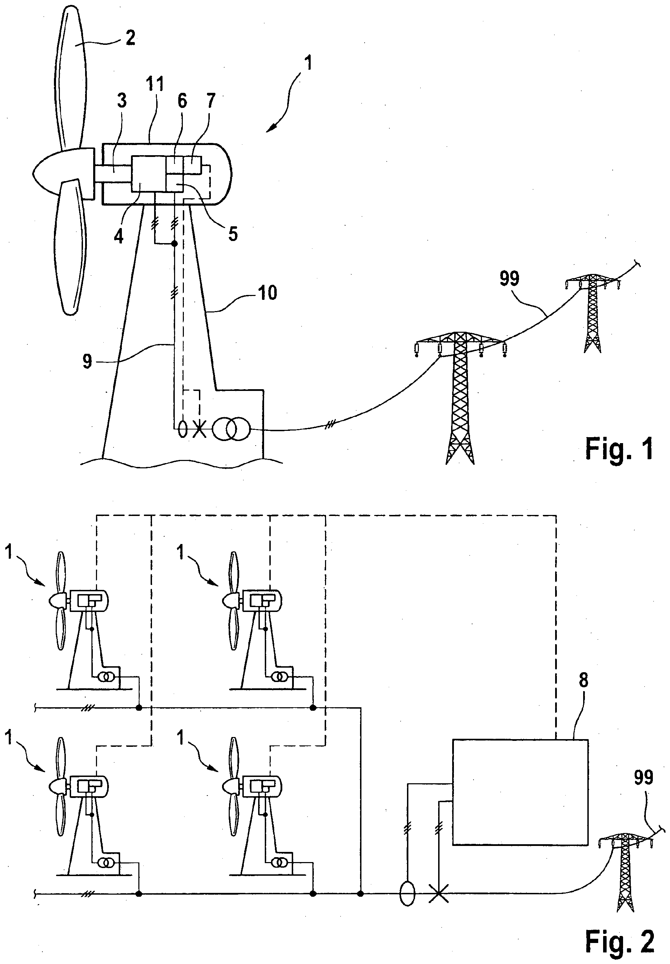

Eine Windenergieanlage 1 gemäß einem Ausführungsbeispiel der Erfindung ist in Fig. 1 dargestellt. Sie umfasst ein drehbar auf einem Turm 10 angeordnetes Maschinenhaus 11, an dessen einer Stirnseite ein Rotor 2 drehbar angeordnet ist. Über eine Rotorwelle 3 treibt er einen Generator 4 an, der in dem dargestellten Ausführungsbeispiel als doppelt gespeister Asynchrongenerator ausgeführt ist. Der Generator ist mit seinem Stator an Anschlussleitungen 9, die über einen optionalen Transformator mit einem Versorgungsnetz 99 verbunden sind. Weiter ist ein Umrichter 5 vorgesehen, über den der Rotor des Generators mit den Anschlussleitungen 9 verbunden ist.

Eine Steuerung 6 ist vorgesehen, die zur Betriebsführung der Windenergieanlage ausgebildet ist. Sie ist über im Einzelnen nicht dargestellte Signalleitungen mit den Komponenten der Windenergieanlage verbunden. Die Steuerung 6 verfügt über ein Kommunikationsinterface, so dass eine Fernsteuerung über Telefon- oder Datenleitungen ermöglicht ist. Weiter dient das Kommunikationsinterface bei in einem Windpark installierter Windenergieanlage zur Kommunikation mit einem Parkmaster 8. Insbesondere dient die Steuerung 6 zum Steuern des Umrichters 5 und weist dazu ein Umrichtersteuermodul 7 auf. Nicht dargestellt sind möglicherweise vorhandenen externe Kompensationsmodule (z.B. Statcom, SVC) die ebenfalls als Blindleistungsquellen im Park vorhanden sein können.

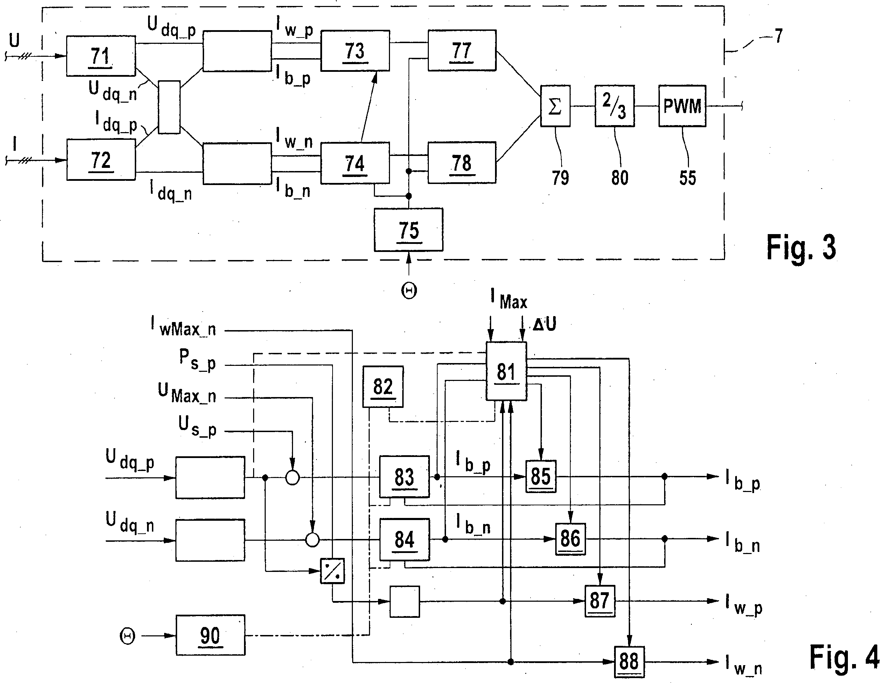

Zur Erläuterung des Aufbaus und der Funktionsweise des Umrichtersteuermoduls 7 wird insbesondere auf Fig. 3 Bezug genommen. An den zum Netz 99 führenden Anschlussleitungen 9 sind Messaufnehmer für Spannung und Strom angeordnet. Die Messwerte sind an Eingänge des Umrichtersteuermoduls 7 angelegt. Weiter angelegt an einen Eingang ist ein Signal für die Phase Θ im Netz 99 bzw. den Anschlussleitungen 99. In einer Eingangsstufe des Umrichtersteuermoduls 7 wird eine Koordinatentransformation in ein drehendes System durchgeführt. Dazu sind ein Block 71 für die Transformation der Spannungswerte und ein Block 72 für die Transformation der Stromwerte vorgesehen. Die Transformation erfolgt in an sich bekannter Weise in ein synchron mit der Phase drehendes System (Mitsystem) und ein entgegengesetzt drehendes System (Gegensystem). Dabei werden symmetrische Anteile von Spannung und Strom im Mitsystem als Gleichanteile dargestellt, und unsymmetrischen Anteile als Wechselanteil mit einer Frequenz entsprechend dem doppelten der Netzfrequenz (also 100 Hz bei 50 Hz-Netzen und 120 Hz bei 60 Hz-Netzen). Nachfolgend sei dieser Wechselanteil als 100 Hz - Komponente bezeichnet. Unsymmetrische Anteile von Spannung und Strom werden im Gegensystem als Gleichanteile dargestellt, und symmetrische Anteile als 100 Hz-Komponenten. Mittels entsprechender Filter (Tiefpass, Bandpass etc.) können die 100 Hz-Komponenten herausgefiltert werden. Am Ausgang der Blöcke werden dann nur noch Gleichgrößen im Mit- und Gegensystem (kenntlich durch Indexbuchstaben p bzw. n) ausgegeben, und zwar als sog. d,q-Koordinaten. Der Block 71 gibt die Spannungswerte im Mit- und Gegensystem und der Block 72 die Stromwerte im Mit- und Gegensystem aus.

Von den in das d,q-Koordinaten-System übertragenen Größen für Spannung und Strom werden die Spannung und Stromwerte des Mitsystems an einen Mitsystem-Regelungsblock 73 angelegt. Der Mitsystem-Regelungsblock 73 entspricht in seinem Aufbau und Funktion weitgehend der bei konventionellen Windenergieanlagen ohne Gegensystem-Regelung vorgesehenen Regelung. Eine nähere Erläuterung ist daher nicht erforderlich. Die Spannungs- und Stromwerte des Gegensystems sind an einen Gegensystem-Regelungsblock 74 angelegt. Er umfasst ein Phasenmodul 75, welches ein Signal über die Phase Θ im Netz für den Gegensystem-Regelungsblock bereitstellt. Details über die Ausführung des Gegensystem-Regelungsblocks 74 werden weiter unten erläutert.

An seinem Ausgang stellt der Gegensystem-Regelungsblock Stellsignale für Wirk- und Blindanteile Iw_n und Ib_n des Stroms im Gegensystem sowie einen Wert für einen Blindstrom Ib_p im Mitsystem bereit. Letzterer wirkt zusammen mit Ausgangssignalen des an sich in bekannter Weise ausgeführten Mitsystem-Regelungsblocks 73. Die Ausgangssignale beider Regelungsblöcke werden unter Berücksichtigung der Phase Θ im Netz mittels Rücktransformationsblöcke 77, 78 jeweils gesondert in ein feststehendes zweidimensionales - Koordinatensystem umgewandelt. In diesem Koordinatensystem werden die Werte für das Mit- und Gegensystem an einem Summationsglied 79 addiert, und schließlich über einen weiteren Koordinatenwandelungsblock 80 in das dreiphasige System umgerechnet, und als Steuersignale an den Umrichter angelegt, genauer gesagt einen den Umrichter 5 kontrollierenden Pulsbreitenmodulator 55.

Zur weiteren Erläuterung der Regelungsblöcke 73, 74 wird auf Fig. 4 Bezug genommen. Zusätzlich dargestellt sind Eingänge für eine Mehrzahl von Sollsignalen, und zwar ein als Grenzwert fungierender Sollwert für den Wirkanteil des Stroms im Gegensystem (IwMax_n), ein Sollwert für die Wirkleistung im Mitsystem (Ps_p), ein als Grenzwert fungierender Sollwert für die Spannung im Gegensystem (UMax_n) und ein Sollwert für die Spannung im Mitsystem (Us_p).

Die Regelungsblöcke 73, 74 weisen jeweils einen Reglerkern 83, 84 auf, der jeweils ein Streckenmodell enthält. Die getrennte Ausführung für Mit- und Gegensystem ist es ermöglicht, dass für das Gegensystem ein anderes Streckenmodell in dem Reglerkern 84 des Gegensystem vorgesehen ist als in dem Reglerkern 83 des Mitsystems. Damit können insbesondere solche Unterschiede zwischen Mit- und Gegensystem berücksichtigt werden, wie sie sich beispielsweise aus einem frequenzabhängigen Rotorwiderstand des Generators 4 ergeben.

Weiter ist ein Leistungsbeobachter 81 vorgesehen. Er dient dazu, in Abhängigkeit von dem Lastzustand der Windenergieanlage noch zulässige Grenzwerte für Wirk- und Blindstrom zu bestimmen, und zwar zweckmäßigerweise sowohl für das Mit- wie auch für das Gegensystem. An dem Leistungsbeobachter 81 sind Eingänge für den Blindstrom im Gegensystem Ib_n, für den Blindstrom im Mitsystem Ib_p sowie für den Spannungswert im Mitsystem U_p. Weiter ist ein Grenzwertsignal für einen zulässigen Maximalstrom I_max vorgesehen. Der Leistungsbeobachter 81 bestimmt daraus die von der Windenergieanlage abgegebene Wirkleistung und berechnet weiter unter Berücksichtigung des zulässigen Maximalstroms I_max Grenzwerte für die Blind- und Wirkanteile im Gegensystem sowie Mitsystem. Die Grenzwerte sind angelegt an entsprechende Begrenzermodule 85, 86, 87 und 88. Ausgangssignale sind Blind- und Wirkanteile in Mit- und Gegensystem Ib_p, Ib_n, Iw_p und Iw_n. Weiter umfasst der Leistungsbeobachter 81 einen Schwellwertschalter, der Unsymmetrien innerhalb eines bestimmten Spannungsbands ΔU toleriert und insoweit die Gegensystemregelung deaktiviert.

Den Reglerkernen 83, 84 zugeordnet ist ein Prioritätsmodul 82. Es ist dazu ausgebildet, zusammenwirkend mit dem Leistungsbeobachter 81 und einem Netzfehlerdetektor 80 eine Abwägung der Stromanteile im Gegensystem, und vorzugsweise auch im Mitsystem vorzunehmen.

Die Betriebsweise ist dabei wie folgt:

Im Normalbetrieb der Windenergieanlage wird möglichst viel Wirkstrom im Mitsystem bereitgestellt. Damit soll in Abhängigkeit von den jeweils herrschenden Windbedingungen ein Höchstmaß an vergüteter Leistung in das Netz 99 eingespeist werden. Der Wirkanteil im Gegensystem soll auf möglichst Null reduziert werden, um schädlichen und materialbelastenden 100 Hz Schwingungen des Triebstrangs entgegenzuwirken. Der Blindanteil des Gegensystems soll hingegen auf einen maximal für die Windenergieanlage oder das Netz 99 zulässigen Wert geregelt werden. Dank des Leistungsbeobachters 81 kann vorgesehen sein, dass in Abhängigkeit von dem Belastungszustand der Windenergieanlage die Ströme im Gegensystem variiert werden. So kann vorgesehen sein, dass bei starkem Windeinfall und damit (zumindest zeitweilig) hohen Strömen im Mitsystem nur eine geringe oder gar keine Einspeisung von weder Wirk- noch Blindanteil im Gegensystem erfolgt. Damit können gerade in Zeiten hoher Last eine Überlastung des Umrichters 5 vermieden werden, beispielsweise durch zu hohe Ströme oder zu hohe Spannungsamplituden im Zwischenkreis des Umrichters 5. Es ergibt sich damit folgende Priorität: Die höchste Priorität kommt der Einspeisung von Wirkstrom im Mitsystem zu, und zwar in der Regel nach Vorgabe durch eine übergeordnete Regelung. Die zweithöchste Priorität kommt dem Bereitstellen von Blindstrom im Mitsystem für die Spannungs- bzw. Frequenzregelung im Netz 99 zu. Die dritte Priorität kommt dem Wirkstrom im Gegensystem zu, um Schwingungen zu vermindern. Der für das Gegensystem verbleibende Strom berechnet sich aus der Differenz zwischen Strom im Mitsystem zu dem zulässigen Maximalstrom. Die vierte Priorität kommt schließlich einer weiteren Reduktion der Spannung des Gegensystems zu. Der Betrag des hierfür zur Verfügung stehenden Blindstroms im Gegensystem bestimmt sich aus der vektoriellen Differenz zwischen dem verbleibenden Strom und dessen Wirkstromanteil.

Im Fall eines Netzfehlers, der entweder von dem Netzfehlerdetektor 80 erkannt sein kann oder durch ein entsprechendes Signal von einem Parkmaster oder einer Leitstelle des Netzbetreibers angezeigt sein kann, ist dank des Prioritätsmoduls 82 eine andere Aufteilung des Stroms vorgesehen. In Abhängigkeit vom Netzfehler und dem derzeitigen Betriebspunkt unterscheidet das Prioritätsmodul 82 zwischen dem Vorrang der Netzstabilisierung oder der Anlagenschonung. Sofern das Prioritätsmodul eine Anlagenschonung vorgibt wird vorrangig Wirkstrom im Mitsystem eingespeist, um Schwingungen im Triebstrang und/oder Drehzahländerungen ausregeln zu können. Sofern das Prioritätsmodul eine Netzstabilisierung vorgibt wird in Priorität Blindstrom im Mit- und Gegensystem eingespeist, je nach symmetrischem und unsymmetrischem Anteil der auftretenden Spannung. Es wird eine Abwägung zwischen dem Blindstrom im Mitsystem Ib_p und dem Blindstrom im Gegensystem Ib_n vorgenommen. Während ersterer spannungsstabilisierend im Netz wirkt, sorgt letzterer für eine Verringerung von Spannungsasymmetrien. Die Abwägung kann mittels einer Tabelle, eines Kennfelds, eines Systemmodells oder mittels einer Formel durchgeführt werden. Das Verhältnis von Blindstrom Mitsystem zu Blindstrom Gegensystem lässt sich berechnen wie im folgenden Beispiel (mit normierten Größen)

$$I_{b\_p} = 0,5 \cdot$$

$$I_{b\_n} = 0,7$$

$$kI = \frac{I_{b\_p}}{I_{b\_n}}$$

Die Aufteilung des verfügbaren Stroms auf Blindstrom im Mitsystem bzw. Blindstrom im Gegensystem erfolgt mit

$$I = I_p + I_n$$

$$I_p = \sqrt{I_{w\_p}^2 + I_{b\_p}^2}$$

$$I_n = I_{b\_n} = \frac{I_{b\_p}}{kI}$$

$$I = \sqrt{I_{w\_p}^2 + I_{b\_p}^2} + \frac{I_{b\_p}}{kI}$$

Damit kann im Fehlerfall sowohl eine gute Stabilisierung im Netz erreicht werden wie auch eine effektive Dämpfung des Triebstrangs gegenüber den schädlichen 100 Hz Schwingungen.

**Patentansprüche**

1. Windenergieanlage mit einem durch einen Rotor (2) angetriebenen Generator (4), der mehrphasig elektrische Leistung zum Einspeisen in ein Netz (99) erzeugt, einem Umrichter (5), der an den Generator (4) und das Netz (99) angeschlossen ist, und einer Steuerung (6, 7), die mit dem Umrichter (5) zusammenwirkt und eine Gegensystemregelung (74) umfasst,
**dadurch gekennzeichnet, dass**
die Gegensystemregelung (74) ein Phasensteuermodul (75) aufweist, das dazu ausgebildet ist, eine elektrische Größe des Gegensystems phasenspezifisch zu bestimmen und im Gegensystem eine Unterteilung in Wirkanteil und Blindanteil vorzunehmen, so dass die Regelung im Gegensystem phasenspezifisch ist.

2. Windenergieanlage nach Anspruch 1,
**dadurch gekennzeichnet, dass**
die Gegensystemregelung (74) einen Wirkleistungsregler umfasst.

3. Windenergieanlage nach Anspruch 2,
**dadurch gekennzeichnet, dass**
der Wirkleistungsregler der Gegensystemregelung einen Sollwerteingang aufweist, an den vorzugsweise ein Wert gleich Null angelegt ist.

4. Windenergieanlage nach einem der vorhergehenden Ansprüche,
**dadurch gekennzeichnet, dass**
die Gegensystemregelung einen Blindleistungsregler umfasst.

5. Windenergieanlage nach Anspruch 4,
**dadurch gekennzeichnet, dass**
der Blindleistungsregler einen Sollwerteingang aufweist, an den vorzugsweise ein Wert ungleich Null angelegt ist.

6. Windenergieanlage nach einem der vorhergehenden Ansprüche,
**dadurch gekennzeichnet, dass**
ein Leistungsbeobachter (81) vorgesehen ist, der dazu ausgebildet ist, in Abhängigkeit von der Belastung der Windenergieanlage (1) und einem zulässigen Maximalwert für den Strom eine verfügbare Leistung und/oder einen verfügbaren Strom zu bestimmen.

7. Windenergieanlage nach Anspruch 6,
**dadurch gekennzeichnet, dass**
der Leistungsbeobachter (81) mit seinem Ausgang an den Sollwerteingang der Gegensystemregelung (74), vorzugsweise deren Blindleistungsregler, angeschlossen ist.

8. Windenergieanlage nach Anspruch 6 oder 7,
**dadurch gekennzeichnet, dass**
ein Begrenzungsmodul (86, 88) vorgesehen ist, das dazu ausgebildet ist, in Abhängigkeit von dem Leistungsbeobachter (81) den Wirk- und/oder Blindanteils des Stroms im Gegensystem zu begrenzen.

9. Windenergieanlage nach einem der vorhergehenden Ansprüche,
**dadurch gekennzeichnet, dass**
ein Schwellwertschalter vorgesehen ist, der so auf die Gegensystemregelung (74) einwirkt, dass Unsymmetrien unterhalb einer vorgebbaren Schwelle toleriert werden.

10. Windenergieanlage nach Anspruch 9,
**dadurch gekennzeichnet, dass**
der Schwellwertschalter in den Leistungsbeobachter (81) gemäß Anspruch 6 integriert ist.

11. Windenergieanlage nach einem der vorhergehenden Ansprüche,
**dadurch gekennzeichnet, dass**
ein Crossovermodul (82) vorgesehen ist, das dazu ausgebildet ist, die Regelung des Gegensystems mit derjenigen des Mitsystems zu verknüpfen.

12. Windpark mit mehreren Windenergieanlagen (1) und einer Parkregelung (8), wobei die Windenergieanlagen (1) jeweils einen durch einen Rotor (2) angetriebenen Generator (4), der mehrphasig elektrische Leistung zum Einspeisen in ein Netz erzeugt, einen Umrichter (5), der an den Generator (4) und das Netz (99) angeschlossen ist, und eine Steuerung (6, 7) aufweisen, die mit dem Umrichter (5) zusammenwirkt,
**dadurch gekennzeichnet, dass**
die Parkregelung (8) dezentral oder zentral eine Gegensystemregelung mit einem Phasensteuermodul (75) aufweist, das dazu ausgebildet ist, eine elektrische Größe des Gegensystems phasenspezifisch zu bestimmen und im Gegensystem eine Unterteilung in Wirkanteil und Blindanteil vorzunehmen, so dass die Regelung im Gegensystem phasenspezifisch ist.

13. Windpark nach Anspruch 12,
**dadurch gekennzeichnet, dass**
die Gegensystemregelung nach einem der Ansprüche 2 bis 11 ausgeführt ist.

14. Windpark nach Anspruch 12 oder 13,
**dadurch gekennzeichnet, dass**
die Gegensystemregelung im Windpark unter Einbeziehung von externen Blindleistungsstellern ausgeführt wird.

15. Verfahren zum Regeln einer Windenergieanlage mit einem durch einen Rotor (2) angetriebenen Generator (4), der mehrphasig elektrische Leistung zum Einspeisen in ein Netz (99) erzeugt, einem Umrichter (5), der an den Generator (4) und das Netz (99) angeschlossen ist, und eine Steuerung (6, 7), die mit dem Umrichter (5) zusammenwirkt, mit den Schritten
Erfassen von Strom und Spannung für die Phasen des Netzes (99),
Transformation in ein mitdrehendes System und ein Gegensystem,
**gekennzeichnet durch**
phasenspezifisches Regeln im Gegensystem.

16. Verfahren nach Anspruch 15,
**gekennzeichnet durch**
Verwenden einer Gegensystemregelung gemäß einem der Ansprüche 2 bis 11.

**Claims**

1. Wind energy installation comprising a generator (4) which is driven by a rotor (2) and generates electrical power in a polyphase manner for feeding into a grid (99), comprising a converter (5) connected to the generator (4) and the grid (99), and comprising a controller (6, 7) which interacts with the converter (5) and comprises a negative phase sequence system regulation mechanism (74),
**characterized in that**
the negative phase sequence system regulation mechanism (74) has a phase control module (75) designed to determine an electrical variable of the negative phase sequence system in a phase-specific manner and to perform a subdivision into active component and reactive component in the negative phase sequence system, so that the regulation in the negative phase sequence system is phase-specific.

2. Wind energy installation according to Claim 1,
**characterized in that**
the negative phase sequence system regulation mechanism (74) comprises an active power regulator.

3. Wind energy installation according to Claim 2,
**characterized in that**
the active power regulator of the negative phase sequence system regulation mechanism has a desired value input, to which a value equal to zero is preferably applied.

4. Wind energy installation according to any of the preceding claims,
**characterized in that**
the negative phase sequence system regulation mechanism comprises a reactive power regulator.

5. Wind energy installation according to Claim 4,

**characterized in that**
the reactive power regulator has a desired value input, to which a value not equal to zero is preferably applied.

6. Wind energy installation according to any of the preceding claims,
**characterized in that**
a power observer (81) is provided, which is designed to determine an available power and/or an available current depending on the loading of the wind energy installation (1) and a permissible maximum value for the current.

7. Wind energy installation according to Claim 6,
**characterized in that**
the power observer (81) is connected by its output to the desired value input of the negative phase sequence system regulation mechanism (74), preferably the reactive power regulator thereof.

8. Wind energy installation according to Claim 6 or 7,
**characterized in that**
a limiting module (86, 88) is provided, which is designed to limit the active and/or reactive component of the current in the negative phase sequence system depending on the power observer (81).

9. Wind energy installation according to any of the preceding claims,
**characterized in that**
a threshold value switch is provided, which acts on the negative phase sequence system regulation mechanism (74) in such a way that unbalances below a predeterminable threshold are tolerated.

10. Wind energy installation according to Claim 9,
**characterized in that**
the threshold value switch is integrated into the power observer (81) according to claim 6.

11. Wind energy installation according to any of the preceding claims,
**characterized in that**
a crossover module (82) is provided, which is designed to combine the regulation of the negative phase sequence system with that of the positive phase sequence system.

12. Wind farm comprising a plurality of wind energy installations (1) and a wind farm regulation mechanism (8), wherein the wind energy installations (1) each have a generator (4) which is driven by a rotor (2) and generates electrical power in a polyphase manner for feeding into a grid, a converter (5) connected to the generator (4) and the grid (99), and a controller (6, 7) which interacts with the converter (5),
**characterized in that**
the wind farm regulation mechanism (8) has, in a decentralized manner or centrally, a negative phase sequence system regulation mechanism having a phase control module (75) designed to determine an electrical variable of the negative phase sequence system in a phase-specific manner and to perform a subdivision into active component and reactive component in the negative phase sequence system, so that the regulation in the negative phase sequence system is phase-specific.

13. Wind farm according to Claim 12,
**characterized in that**
the negative phase sequence system regulation mechanism is embodied according to any of Claims 2 to 11.

14. Wind farm according to Claim 12 or 13,
**characterized in that**
the negative phase sequence system regulation mechanism is embodied in the wind farm with the inclusion of external reactive power controllers.

15. Method for regulating a wind energy installation comprising a generator (4) which is driven by a rotor (2) and generates electrical power in a polyphase manner for feeding into a grid (99), comprising a converter (5) connected to the generator (4) and the grid (99), and comprising a controller (6, 7) which interacts with the converter (5), comprising the following steps:

detection of current and voltage for the phases of the grid (99),
transformation into a positive phase sequence system and a negative phase sequence system,

**characterized by**
phase-specific regulation in the negative phase sequence system.

16. Method according to Claim 15,
**characterized by**
use of a negative phase sequence system regulation mechanism according to any of Claims 2 to 11.

**Revendications**

1. Installation d'énergie éolienne avec un générateur (4) entraîné par un rotor (2), qui génère une puissance électrique multiphasée destinée à être introduite dans un réseau (99), un convertisseur (5) qui est connecté au générateur (4) et au réseau (99), et une commande (7) qui interagit avec le convertisseur (5) et une régulation de système inverse (74), **caractérisée en ce que** la régulation de système inverse (74) comprend un module de contrôle de phase (75), qui est conçu pour déterminer une grandeur électrique du système inverse de manière spécifique à une phase et d'effectuer, dans le système inverse, une division en partie active et en partie réactive ; de façon à ce que la régulation dans le système inverse soit spécifique à la phase.

2. Installation d'énergie éolienne selon la revendication 1,
**caractérisée en ce que**
le régulateur de puissance active de la régulation du système inverse comprend une entrée de valeur de consigne à laquelle, de préférence, une valeur égale à zéro est appliquée.

3. Installation d'énergie éolienne selon la revendication 2,
**caractérisée en ce que**
le régulateur de puissance active de la régulation de système inverse comprend une entrée de valeur de consigne à laquelle, de préférence, une valeur égale à zéro est appliquée.

4. Installation d'énergie éolienne selon l'une des revendications précédentes,
**caractérisée en ce que**
la régulation de système inverse comprend un régulateur de puissance réactive.

5. Installation d'énergie éolienne selon la revendication 4,
**caractérisée en ce que**
le régulateur de puissance réactive comprend une entrée de valeur de consigne à laquelle de préférence une valeur différente de zéro est appliquée.

6. Installation d'énergie éolienne selon l'une des revendications précédentes,
**caractérisée en ce que**
un observateur de puissance (81) est prévu, qui est conçu pour déterminer, en fonction de la charge de l'installation d'énergie éolienne (1) et d'une valeur maximale admissible pour le courant, une puissance disponible et/ou un courant disponible.

7. Installation d'énergie éolienne selon la revendication 6,
**caractérisée en ce que**
l'observateur de puissance (81) est connecté, avec sa sortie, à l'entrée de valeur de consigne de la régulation de système inverse (74), de préférence de son régulateur de puissance réactive.

8. Installation d'énergie éolienne selon la revendication 6 ou 7,
**caractérisée en ce que**
un module de limitation (86, 88) est prévu, qui est conçu pour limiter, en fonction de l'observateur de puissance (81), la partie active et/ou réactive du courant dans le système inverse.

9. Installation d'énergie éolienne selon l'une des revendications précédentes,
**caractérisée en ce que**
un commutateur de valeur seuil est prévu, qui agit sur la régulation du système inverse (74) de façon à ce que des asymétries en dessous d'un seuil prédéterminé soient tolérées.

10. Installation d'énergie éolienne selon la revendication 9,
**caractérisée en ce que**
le commutateur de valeur seuil est intégré dans l'observateur de puissance (81) selon la revendication 6.

11. Installation d'énergie éolienne selon l'une des revendications précédentes,
**caractérisée en ce que**
un module de cross-over (82) est prévu, qui est conçu pour combiner la régulation du système inverse avec celle du système direct.

12. Parc d'éoliennes avec plusieurs installations d'énergie éolienne (1) et une régulation de parc (8), les installations d'énergie éolienne (1) comprenant chacune un générateur (4) entraîné par un rotor (2), qui génère de manière multiphasée une puissance électrique destinée à être introduite dans un réseau, un convertisseur (5), qui es connecté au générateur (4) et au réseau (99), et une commande (6, 7) qui interagit avec le convertisseur (5),
**caractérisé en ce que**
la régulation du parc (8) comprend une régulation de système inverse décentralisée ou centralisée avec un module de contrôle de phase (75) qui est conçu pour déterminer une grandeur électrique du système inverse de manière spécifique à la phase et effectuer, dans le système inverse, une division en une partie active et une partie réactive, de façon à ce que la régulation dans le système inverse soit spécifique à la phase.

13. Parc d'éoliennes selon la revendication 12,
**caractérisé en ce que**
la régulation du système inverse est conçue selon l'une des revendications 2 à 11.

**14.** Parc d'éoliennes selon la revendication 12 ou 13,

**caractérisé en ce que**
la régulation du système inverse dans le parc d'éoliennes est effectuée en tenant compte de régulateurs de puissance réactive externes.

**15.** Procédé de régulation d'une installation d'énergie éolienne avec un générateur (4) entraîné par un rotor (2), qui génère, de panière multiphasée, une puissance électrique destinée à être introduite dans un réseau (99), un convertisseur (5), qui est connecté au générateur (4) et au réseau (99), et une commande (6, 7) qui interagit avec le convertisseur (5), avec les étapes suivantes:

mesure du courant et de la tension pour les phases du réseau (99),
transformation en un système direct et un système inverse,

**caractérisé par**
une régulation spécifique à la phase dans le système inverse.

**16.** Procédé selon la revendication 15,
**caractérisé par**
l'utilisation d'une régulation de système inverse selon l'une des revendications 2 à 11.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3206598 A1

**In der Beschreibung aufgeführte Nicht-Patentliteratur**

- **MAGUEED, F.** *Transient Performance of Voltage Source Converter under Unbalanced Voltage Dips*

- **SACCOMANDO, G. et al.** *Control and Operation of Gridconnected Voltage Source Converter Under Grid Disturbances in Variable-speed Wind Turbines*